# EUROPÄISCHE PATENTSCHRIFT

(11) **EP 1 278 779 B1**
(45) Veröffentlichungstag und Bekanntmachung des Hinweises auf die Patenterteilung: **29.06.2005**
(21) Anmeldenummer: 01931601.7
(22) Anmeldetag: 12.04.2001
(51) Int. Cl.: C08B 11/00, C08L 1/26

(54) **VERFAHREN ZUR HERSTELLUNG VON GUT BENETZBAREN, WASSERLÖSLICHEN, PULVERFÖRMIGEN, MINDESTENS ALKYLIERTEN, NICHT-IONISCHEN CELLULOSEETHERN**
METHOD FOR THE PRODUCTION OF EASILY WETTED, WATER-SOLUBLE, POWDERED AT LEAST ALKYLATED NON-IONIC CELLULOSE ETHERS
PROCEDE POUR LA PRODUCTION D'ETHERS CELLULOSIQUES NON IONIQUES, AU MOINS ALKYLES, PULVERULENTS, SOLUBLES DANS L'EAU ET BIEN MOUILLABLES

(30) Priorität: 12.04.2000 DE 10018155
(43) Veröffentlichungstag der Anmeldung: 29.01.2003
(73) Patentinhaber: SE Tylose GmbH & Co.KG, 65203 Wiesbaden (DE)
(72) Erfinder: HAMMES, Alf, 55252 Mainz-Kastel (DE); DÖNGES, Reinhard, 65812 Bad Soden (DE)
(74) Vertreter: Plate, Jürgen, Dr.
(86) Internationale Anmeldenummer: PCT/EP2001/004260
(87) Internationale Veröffentlichungsnummer: WO 2001/077183

(56) Entgegenhaltungen:
- WO-A-00/34382
- US-A- 2 647 064

## Beschreibung

Die vorliegende Erfindung betrifft ein Verfahren zur Herstellung von wasserlöslichen, pulverförmigen, mindestens alkylierten, nicht-ionischen Celluloseethern, die vorzugsweise in Wasser, das eine Temperatur im Bereich von 35 bis 95°C aufweist, flockbar sind, die vor der Umsetzung von der Cellulose zum Celluloseether mit Tensiden so modifiziert werden, dass aufgrund verbesserter Benetzbarkeit eine weitgehend klumpenfreie Einrührbarkeit des Celluloseethers in kaltes Wasser resultiert.

Die Herstellung von Celluloseethern mit einheitlichen oder unterschiedlichen Substituenten ist bekannt (siehe z. B. Ullmann's Enzyklopädie der Technischen Chemie, Bd. 9, "Celluloseether", Verlag Chemie, Weinheim, 4. Auflage 1975, S. 192ff; K. Engelskirchen: "Polysaccharid-Derivate" in Houben Weyl, Bd. E 20/III, 4. Aufl., Georg Thieme Verlag Stuttgart, 1987, S. 2042 ff).

Zur Herstellung dieser Celluloseether, wie zum Beispiel Methylcellulose, Methylhydroxyethylcellulose, Methylhydroxypropylcellulose und Ethylhydroxyethylcellulose, wird das Ausgangsmaterial, die Cellulose, zunächst zur Vergrößerung der Oberfläche gemahlen, wobei die resultierende Teilchengröße in der Regel kleiner als 2,5 mm, möglichst sogar kleiner als 1 mm sein sollte. Das resultierende, voluminöse Cellulosepulver wird durch Zugabe von Base, wie zum Beispiel NaOH, KOH, LiOH und/oder NH₄OH, in fester oder flüssiger Form, in die sogenannte "Alkalicellulose" überführt. Es schließt sich, mit oder ohne Isolierung der Alkaliceiluiose, eine ein- oder mehrstufige, kontinuierliche oder diskontinuierliche Veretherung mit den entsprechenden Reagenzien an. Die resultierenden Celluloseether werden mit Wasser oder geeigneten Lösungsmittelgemischen auf bekannte Weise von Reaktionsnebenprodukten gereinigt, getrocknet und gemahlen und gegebenenfalls mit anderen Komponenten abgemischt.

Trotz guter Löslichkeit alkylierter Celluloseether in kaltem Wasser stellt die Herstellung wässriger Lösungen derselben häufig ein Problem dar. Dies gilt insbesondere dann, wenn der Celluloseether als feines Pulver mit vergrößerter Oberfläche vorliegt, weil eine schnelle Viskositätsentwicklung gewünscht wird. Kommt ein solches feines Celluloseether-Pulver mit Wasser in Berührung, so quellen die einzelnen Körnchen und ballen sich zu größeren Agglomeraten zusammen, deren Oberfläche gelartig verdickt ist. Es befindet sich jedoch, in Abhängigkeit von der Mischintensität, ein gewisser Anteil völlig unbenetzten Celluloseethers im Inneren dieser Agglomerate. Ein vollständiges Lösen dieser Agglomerate kann, in Abhängigkeit von der Viskosität der resultierenden Lösung und der durchschnittlichen Polymer-Kettenlänge, bei hochviskosen Produkten bis zu 24 Stunden in Anspruch nehmen.

Um das geschilderte, bei der Herstellung wässriger Lösungen von Celluloseethern auftretende Problem zu minimieren, wurden verschiedene Lösungsansätze vorgeschlagen:

Man kann das Celluloseether-Pulver in Wasser einer Temperatur oberhalb des Flockpunktes des entsprechenden Celluloseethers einstreuen und dann langsam abkühlen. Der Celluloseether verteilt sich dann gleichmäßig im Wasser, ohne zu klumpen, bevor er bei Erniedrigung der Temperatur allmählich in Lösung geht. Ein solches Verfahren ist jedoch zeitintensiv und erfordert eine Apparatur zum Erhitzen des Wassers.

Möchte man den Celluloseether direkt in kaltes Wasser einrühren, ohne dass Verklumpung eintritt, so kann man z. B. durch Einsatz von Glyoxal bei der Herstellung des Celluloseethers eine partielle, reversible Vemetzung einstellen, die zur Bildung von Halbacetalen mit freien Hydroxygruppen des Celluloseethers führt. Beim Lösen in neutralem oder schwach saurem Wasser wird das Halbacetal mit einer Zeitverzögerung gespalten und es erfolgt ein sprunghafter Viskositätsanstieg ohne Verklumpung erst nach der Verteilung des Pulvers im wässrigen Medium. Die Länge der Zeitverzögerung kann über den Grad der Vemetzung recht genau eingestellt werden. Nachteilig bei dieser Variante sind jedoch der zusätzliche Arbeitsschritt bei der Herstellung des Celluloseethers, nämlich die Vernetzung, sowie der zeitverzögerte Viskositätsanstieg.

Eine weitere Möglichkeit zur Verbesserung der Einrührbarkeit von Celluloseethern in kaltes Wasser ist die Behandlung derselben mit Tensiden, die Laurylradikale enthalten. Bei diesem in der US-A-2 647 064 und der US-A-2 720 464 beschriebenen Verfahren werden Celluloseether in wässriger Suspension bei einer Temperatur oberhalb des Flockpunktes der Celluloseether mit Tensiden behandelt, so dass die resultierenden Produkte oberflächlich adsorbierte Tenside enthalten, die eine verbesserte Einrührbarkeit bewirken. Die Behandlung mit Tensiden kann dabei entweder im Rahmen der wässrigen Aufarbeitung des Materials zur Befreiung von Reaktionsnebenprodukten und Salz erfolgen, oder durch Redispergierung von Celluloseethern in heißen, wässrigen Systemen bei einer Temperatur oberhalb des Flockpunktes der Celluloseether. Offenbart wird auch ein Aufsprühen des Tensids auf den feuchten Celluloseether während des Zentrifugierens, das zur Abtrennung des wässrigen Mediums vom Celluloseether dient. Ein erheblicher Nachteil der beschriebenen Verfahren ist jedoch der notwendige Einsatz von überschüssigem Tensid in der heißen wässrigen Suspension des Celluloseethers. Nur ein kleiner Teil des eingesetzten Tensides wird auf dem Celluloseether adsorbiert. Gemäß den Beispielen der US-A-2 720 464 beträgt dieser Anteil nur 3 bis 6 %. Der überwiegende Anteil des nicht adsorbierten Tensids muss, da er nicht zusammen mit dem Waschwasser entsorgt werden kann, sowie aus Kostengründen, recycliert oder wiedergewonnen werden. Darüber hinaus schäumt die heiße, wässrige Tensidlösung bei der Abtrennung vom Celluloseether sehr stark. Zusätzlich muss im Prozess eine Zugabe- bzw. Mischmöglichkeit für die Mischung von Tensid und Wasser zu einem Zeitpunkt geschaffen werden, zu dem in der Regel keine Reagenzienzugabe erfolgt.

In der WO 99/47249 wird eine verbesserte Dispergierbarkeit und Benetzbarkeit von Hydrokolloiden durch trockenes Abmischen von erhitztem Material mit Tensiden oberhalb des Schmelzpunktes derselben erreicht. Neben dem zusätzlichen apparativen Aufwand für ein solches Verfahren ist die gleichmäßige Verteilung geringer Mengen Tensid problematisch.

In der JP-A-11/322 801 werden Glykole und/oder nicht-ionische Tenside mit HLB-Werten von 3 bis 17 auf Celluloseether aufgesprüht, um die Einrührbarkeit der Celluloseether zu verbessern. HLB-Wert bedeutet "Hydrophil-Lipophil-Balance", und ist ein Maß für die Polarität der Tenside und ihr Vermögen, Öl-in-Wasser-oder Wasser-in-Öl-Emulsionen zu bilden.

In der CN-A-1 149 643 werden polyanionische Celluloseether wie z.B. Carboxymethylcellulose hergestellt, indem Cellulose mit einer Tensid enthaltenden Baselösung alkalisiert, verethert, nachbehandelt und versponnen wird.

In der JP-B-89/038 403 wird der Einsatz unterschiedlicher Tenside in Mengen von 0,1 bis 10 % bei der Herstellung von Hydroxyethylcellulose in organischen Lösungsmitteln, insbesondere Isopropanol und tert.-Butanol, beschrieben. Die resultierenden Produkte zeigen im Vergleich zu Produkten, die ohne Tensidzusatz hergestellt wurden, eine verbesserte Ktarlöslichkeit.

Aufgabe der vorliegenden Erfindung war die Bereitstellung eines Verfahrens zur Herstellung von mindestens alkylierten, nicht-ionischen Celluloseethern, die vorzugsweise in Wasser, das eine Temperatur im Bereich von 35 bis 95°C aufweist, flockbar sind, das Produkte liefert, die sich durch ein verbessertes Benetzungs- und Einrührverhalten in kalter, wässriger Lösung auszeichnen. Das Verfahren sollte nicht die Nachteile des Standes der Technik aufweisen, keiner zusätzlichen Aggregate oder Verfahrensschritte bedürfen und die Reinigung der Produkte von Reaktionsnebenprodukten und Salzen durch Auswaschen mit einem Überschuß an Wasser bei einer Temperatur oberhalb des Flockpunktes des Celluloseethers, aber unterhalb von 100°C sicherstellen.

Gelöst wird diese Aufgabe durch Zugabe mindestens eines Tensids zur Cellulose vor der Umsetzung zum Celluloseether im Rahmen der Dosierung der für die Herstellung der Celluloseether benötigten Reaktanden.

Gegenstand der vorliegenden Erfindung ist somit ein Verfahren zur Herstellung von mindestens alkylierten, nicht-ionischen Celluloseethern, bei denen mindestens 10 % aller Hydroxygruppen alkyliert sind und die in Wasser in einem Temperaturbereich von 45 bis 95°C, vorzugsweise 50 bis 95°C und besonders bevorzugt 65 bis 95°C, flockbar sind,
bei dem die Umsetzung zum Celluloseether erfolgt, indem
a) die Cellulose durch Alkalisierung in Gegenwart von Wasser, Base und organischem Dispergierhilfsmittel aktiviert wird,
b) die aktivierte Cellulose in einem ein- oder mehrstufigen Verfahren mit einem Veretherungsmittel im Sinn einer Williamson'schen Ethersynthese verethert wird und
c) das Produkt in einem nachfolgenden Reinigungsschritt durch Auswaschen mit Wasser, das eine Temperatur oberhalb des Flockpunktes des Celluloseethers aufweist, von Reaktionsnebenprodukten und Salzen gereinigt wird,
das dadurch gekennzeichnet ist, dass vor der Umsetzung der Cellulose zum Celluloseether mindestens ein Tensid in fester, flüssiger und/oder gelöster Form zugegeben wird.

Flockbarkeit im Sinne der vorliegenden Anmeldung bedeutet, dass mindestens 90 Gew.-% des Celluloseethers bei gegebener Temperatur in Wasser unlöslich sind.

Die erfindungsgemäß hergestellten Celluloseether weisen eine verbesserte Benetzbarkeit auf und neigen deshalb beim Herstellen wässriger Lösungen zu geringerer Klumpenbildung.

Dabei erweist es sich als unerheblich, ob das Tensid als wässrige Lösung oder in Lösung oder Dispersion zusammen mit dem verwendeten organischen Dispergierhilfsmittel dosiert wird. Das verwendete Tensid wird vollständig und gleichmäßig von der Cellulose adsorbiert, und zwar unabhängig von der Art des verwendeten Tensides. Der Effekt ist bei anionischen Tensiden ebenso ausgeprägt wie bei neutralen oder kationischen Tensiden, bei Tensiden mit hohem HLB-Wert ebenso wie bei Tensiden mit niedrigem HLB-Wert, unabhängig von der konkreten Struktur.

Überraschenderweise wurde gefunden, dass trotz der sehr guten Löslichkeit bzw. vollständigen Mischbarkeit der verwendeten Tenside mit Wasser diese auch nach der Umsetzung zum Celluloseether vollständig im Produkt verbleiben, obwohl wegen der wässrigen Aufarbeitung zur Entfernung der Reaktionsnebenprodukte, Salze und Dispergierhilfsmittel bei erhöhter Temperatur und großem Wasser-Überschuss (Gewichtsteileverhältnis 5:1 bis 100:1, bezogen auf den Celluloseether) erwartet werden sollte, dass die Tenside zumindest größtenteils ausgewaschen werden. Entsprechend konnte im für die Auswaschung verwendeten Waschwasser kein Tensid nachgewiesen werden.

Die erfindungsgemäß hergestellten Celluloseether weisen in Bezug auf Benetzbarkeit und klumpenfreie Einrührbarkeit bei vergleichbarer Tensid-Dotierung ähnliche Eigenschaften auf wie die Celluloseether, die gemäß den Verfahren der JP-A-11/322 801, der US-A-2 647 064 und der US-A-2 720 464 erst nach der Umsetzung zum Celluloseether mit Tensiden behandelt werden. Das erfindungsgemäße Verfahren weist jedoch nicht die Nachteile des Standes der Technik, insbesondere den hohen Tensidverlust der in den amerikanischen Schriften geschilderten Verfahren, auf.

Das Verhältnis von eingesetztem organischem Dispergierhilfsmittel zu Cellulose beträgt vorzugsweise maximal 25:1, besonders bevorzugt maximal 15:1.

Als organische Dispergierhilfsmittel sind alle aus der Literatur für diesen Anwendungszweck bekannten Dispergierhilfsmittel geeignet, vorzugsweise jedoch aliphatische und cyclische Ether, wie z.B. Dimethylether, Diethylether, Dibutylether, Dimethoxyethan, 1,4-Dioxan oder Tetrahydrofuran.

Der Wassergehalt im Reaktandengemisch während der Alkalisierung sollte vorzugsweise maximal 25 Moläquivalente, besonders bevorzugt maximal 15 Moläquivalente, bezogen auf die eingesetzte Menge Cellulose, betragen, und insbesondere im Bereich von 2 bis 5 Moläquivalenten liegen.

Es werden maximal 20 Gew.-%, vorzugsweise maximal 10 Gew.-% und besonders bevorzugt maximal 1 Gew.-% Tensid, bezogen auf die eingesetzte Menge Cellulose zugegeben. Man stellt überraschenderweise fest, dass schon bei sehr geringen Tensid-Einsatzmengen von etwa 0,01 Gew.-%, bezogen auf die eingesetzte Menge Cellulose, in Bezug auf die Schnelligkeit und Gleichmäßigkeit der Viskositätsentwicklung beim Einrühren in kaltem Wasser ein Effekt auftritt. Ebenso überraschend ist, dass schon ab einer Tensid-Einsatzmenge von ca. 1 Gew.-%, bezogen auf die eingesetzte Menge Cellulose, in Bezug auf die Schnelligkeit und Gleichmäßigkeit der Viskositätsentwicklung beim Einrühren in kaltem Wasser ein annähernd maximaler Effekt resultiert. Die Zugabe des Tensides erfolgt dabei im Allgemeinen vor der Zugabe der Base.

Bevorzugt erfolgt die Dosierung des Tensids in Form einer wässrigen Lösung beliebiger Konzentration. Darüber hinaus ist auch eine Zugabe des Tensids in fester oder flüssiger Form zum organischen Dispergierhilfsmittel oder eine direkte Dosierung zum Gemisch denkbar.

Bevorzugt werden Tenside eingesetzt, deren Netzvermögen nach DIN 53901 bei 20°C weniger als 10 g wirksame Substanz/l, bevorzugt weniger als 5 g wirksame Substanz/l und besonders bevorzugt weniger als 2 g wirksame Substanz/l beträgt.

Darüber hinaus werden besonders bevorzugt solche Tenside eingesetzt, die die Oberflächenspannung wässriger Lösungen um mindestens 20 % erniedrigen.

Besonders bevorzugt werden anionische Tenside, wie z. B. Phosphorsäuremono-und -diester mit langkettigen, verzweigten Alkylpolyethylenglykolethergruppen, Sulfate, wie z. B. Dodecylsulfat-Na-Salz oder Cetylstearylsulfat-Na-Salz, Alkylphenol-polyglykolethersulfate, Sorbitanoleate, Alkansulfonate, kationische Tenside, wie z.B. Cocosalkyldimethylbenzyl-ammoniumchlorid oder Dicocosdimethyl-ammoniumchlorid, neutrale Tenside, wie z. B. Polyethermodifizierte Polysiloxane oder Alkylphenolpolyglykolether, sowie Betaine, wie z.B. Fettsäureamidoalkylbetain oder N,N-Distearyl-N-methyl-N-(3-sulfopropyl)-ammonium-betain, eingesetzt.

Die erfindungsgemäß hergestellten Celluloseether lassen sich bei ausreichender Mischenergie klumpenfrei in kaltes Wasser einrühren. Bei nicht ausreichender Mischenergie resultiert ein niedrigerer Verklumpungsgrad und damit eine schnellere und gleichmäßigere Viskositätsentwicklung, als dieses bei Produkten der Fall ist, die ohne den Einsatz von Tensiden zum Celluloseether umgesetzt werden.
Diese Aussage gilt insbesondere für den Fall sehr fein konfektionierter Produkte, in denen mehr als 90 % aller Teilchen einen Durchmesser von weniger als 180 µm aufweisen.

Das erfindungsgemäße Verfahren wird im Folgenden durch Ausführungsbeispiele näher beschrieben, ohne dadurch jedoch beschränkt zu werden:
Beispiele Nr. 1 bis 3, 5 bis 13, 17 und 18 (Vergleich):
Herstellung der Celluloseether ohne Zusatz von Tensiden

In einem Reaktor mit liegender Mischerwelle werden 100 Gewichtsteile eines Holzzellstoffes a, b oder c (0,5 mm Mahlung) in 350 Teilen Dimethoxyethan mit einer zusätzlichen Menge Wasser und 58,3 Teilen einer 49,3 %igen Natronlauge versetzt, so dass der Gesamt-Wassergehalt im Gemisch der Reaktanden nach Zugabe der Natronlauge 42,05 Teilen, bezogen auf die Cellulose, entspricht. Es wird nach Zugabe der Natronlauge für einen angemessenen Zeitraum, in der Regel 30 Minuten bis 2 Stunden, bei geeigneter Temperatur alkalisiert und dann mit einer ausreichenden Menge Ethylenoxid bei 60 bis 80°C umgesetzt, um den entsprechenden Hydroxyethyl-Substitutionsgrad (MS) einzustellen.
Es wird dann durch Zugabe einer zweiten Portion 49,3 %iger Natronlauge und anschließender Addition der Menge Methylchlorid, die der Summe der Moläquivalentmengen aus beiden Natriumhydroxid-Teilmengen, bezogen auf die eingesetzte Menge Cellulose, entspricht, bei 90 bis 100°C so lange umgesetzt, bis der entsprechende Methylgruppen-Substitutionsgrad erreicht ist.
Nach abgeschlossener Reaktion wird das organische Dispergierhilfsmittel unter reduziertem Druck aus dem Reaktionsgemisch abdestilliert und das resultierende Rohprodukt so lange mit heißem Wasser einer Temperatur oberhalb des Flockpunktes des entsprechenden Celluloseethers ausgewaschen, bis das Material vollständig von Reaktionsnebenprodukten gereinigt und der Salzgehalt unter 1 % ist. Für die Auswaschung des Celluloseethers mit kochendem Wasser wird jedoch insgesamt mindestens die 10-fache Menge an Wasser verwendet.

Die resultierenden Rohprodukte werden dann wie folgt weiterbehandelt:
Beispiele Nr. 1, 12 und 17 (Vergleich)
Herstellungsvariante A (ohne Zusatz von Tensid)

Die entsprechenden Rohprodukte ohne Tensidzusatz werden getrocknet, gemahlen, gesiebt und auf die gewünschte Komgrößenverteilung zurückgemischt. Die Korngrößenverteilung der getesteten Produkte setzt sich wie folgt zusammen:
75 % < 63 µm, 20 % 63 bis 100 µm und 5 % 100 bis 125 µm.
Beispiele Nr. 2, 3, 5 bis 11, 13 und 18 (Vergleich)
Herstellungsvariante B: Zumischung von Tensid zum Rohprodukt analog US-A-2 720 464, Spalte 6, Zeile 34 bis 39

100 g Rohprodukt (absolut trocken, d.h. korrigiert um die Feuchte) werden mit 5 g einer Lösung oder Suspension von Tensid in Wasser, entsprechend dem in den Tabellen angegebenen Gewichtsverhältnissen Tensid, bezogen auf den Celluloseether (absolut trocken), für 30 Minuten innig verknetet, getrocknet, gemahlen, gesiebt und auf die gewünschte Komgrößenverteilung zurückgemischt.
Beispiele Nr. 4, 14 bis 16 und 19
Herstellungsvariante C: Herstellung von Celluloseethern unter Einsatz von Tensiden (erfindungsgemäßes Verfahren)

Es wird, wie für die Herstellung der Celluloseether ohne Zusatz von Tensiden beschrieben, verfahren, mit dem Unterschied, dass eine entsprechende Menge Tensid in Gewichtsprozenten, bezogen auf die eingesetzte Menge Cellulose, in wässriger Lösung bzw. Suspension dem Reaktandengemisch vor Zugabe der Natronlauge zugesetzt wird.

| Eingesetzte Tensidmenge: | | |
|---|---|---|
| Beispiel Nr. | Tensid | Einsatzmenge [Gewichtsteile] |
| 4 | A | 0,2 |
| 14 | D | 0,2 |
| 15 | G | 0,2 |
| 16 | A | 1,0 |
| 19 | A | 0,2 |

Das aus der Umsetzung resultierende Rohprodukt wird behandelt, wie oben für die Herstellungsvariante A beschrieben.

Die Aufzeichnung der Viskositätsentwicklung beim Lösen der Celluloseether im Brabender-Viskosimeter bei 20°C, die mit dem Ausmaß der Verklumpung direkt korreliert, wird folgendermaßen durchgeführt:

Die Celluloseether werden als Feinstpulver mit folgender Komgrößenverteilung verwendet: 75 % mit einer Korngröße < 63 µm, 20 % mit einer Korngröße 63 bis 100 µm und 5 % mit einer Korngröße zwischen 100 bis 125 µm.
Je nach erzielbarer Endviskosität wird eine geeignete Menge Celluloseether unter Rühren mit einem Ultra-Turrax® bei 8000 U/min in einem Behälter mit der entsprechenden Menge Wasser bei einem Endgewicht von 430 g für 10 Sekunden innig vermischt. Das Wasser hat eine Temperatur von 20 +/- 1°C. Dann wird die Lösung im Verlauf von maximal 5 Sekunden in ein Viskosimeter der Firma Brabender überführt und die Messung gestartet. Die Viskositätsentwicklung in [BE] (Brabender-Einheiten), die direkt zu der entsprechenden Viskosität in mPas (nach Brookfield) proportional ist, wird Software-unterstützt für maximal 3 Stunden aufgezeichnet und ausgewertet.

Die Tabellen 1 und 3 verdeutlichen, dass es für die Verklumpungsneigung und daraus resultierend die Viskositätsentwicklung von Celluloseethern beim Einrühren in kaltes Wasser unerheblich ist, ob das Tensid in Form einer Lösung mit dem feuchten Celluloseether innig vermischt (Beispiele 3 und 18 in Analogie zur US-A-2 720 464, Spalte 6, Zeile 34 bis 39) oder direkt zum Reaktandengemisch vor der Umsetzung zum Celluloseether zugegeben wird (Beispiele 4 und 19).

**Tabelle 1:**

| | | | | | | |
|---|---|---|---|---|---|---|
| Viskositätsentwicklung/Löseverhalten im Brabender-Viskosimeter bei 20°C Material: Methylhydroxyethylcellulose auf Basis Holzzellstoff a; Viskosität: 39000 mPas (1,9 %ig, absolut trocken, gemessen mit einem Brookfield-Viskosimeter Modell RVT); Einwaage 3 g (absolut trocken) | | | | | | |

| Bsp. Nr. | Tensid | Einsatzmenge Tensid [%] | Herst-Variante | Theoret. Endvis.¹⁾ [BE] | 20 % EV²⁾ [min] | 50 % EV²⁾ [min] |
|---|---|---|---|---|---|---|
| 1 | - | - | A | 795 | 17 | - |
| 2 | A | 0,01 | B | 795 | 5,5 | - |
| 3 | A | 0,2 | B | 795 | 1 | 4,5 |
| 4 | A | 0,2 | C | 795 | 1 | 4,5 |
| 5 | A | 1,0 | B | 795 | 0,5 | 1 |
| 6 | A | 5,0 | B | 795 | 0,5 | 1 |
| 7 | B | 0,2 | B | 795 | 0,5 | 4 |
| 8 | C | 0,2 | B | 795 | 0,5 | 2 |
| 9 | D | 0,2 | B | 795 | 0,5 | 4 |
| 10 | E | 0,2 | B | 795 | 0,5 | 2 |
| 11 | F | 0,2 | B | 795 | 0,5 | 2,5 |

| | | | | | | |
|---|---|---|---|---|---|---|
| ¹⁾ Theoretisch unter den gewählten Bedingungen erzielbare Viskosität in Brabender-Einheiten [BE] bei vollständiger Auflösung des Celluloseethers | | | | | | |
| ²⁾ Zeit in Minuten bis zur Erreichung von 20 bzw. 50 % der erzielbaren Endviskosität in [BE]; ein Strich in den Tabellen bedeutet, die entsprechende Viskositätshöhe wurde aufgrund vergleichsweise starker Verklumpung auch nach 180 Minuten Messzeit nicht erreicht Tensid A: anionisches Tensid: 2-Ethylhexylsulfonat-Na-Salz; Löslichkeit in Wasser: 300 g/l Tensid B: anionisches Tensid: Dialkylsulfosuccinat, Na-Salz; löslich in Wasser Tensid C: kationisches Tensid: Dicocosdimethyl-ammoniumchlorid; löslich in Wasser Tensid D: neutrales Tensid: EO/PO-Blockpolymerisat; löslich in Wasser Tensid E: neutrales Tensid: Nonylphenolpolyglykolether; löslich in Wasser Tensid F: Betain: N,N-Distearyl-N-methyl-N-(3-sulfopropyl)-ammonium-betain; Löslichkeit in Wasser: < 10 g/l | | | | | | |

**Tabelle 2:**

| | | | | | | |
|---|---|---|---|---|---|---|
| Viskositätsentwicklung/ Löseverhalten im Brabender-Viskosimeter bei 20°C Material: Methylhydroxyethylcellulose auf Basis Holzzellstoff b; Viskosität 23000 mPas (1,9 %ig, absolut trocken, gemessen mit einem Brookfield-Viskosimeter); Einwaage 4,3 g (absolut trocken) | | | | | | |

| Bsp. Nr. | Tensid | Einsatzmenge Tensid [%] | Herst-Variante | Theoret. Endvis. [BE] | 20 % EV [min] | 50 % EV [min] |
|---|---|---|---|---|---|---|
| 12 | - | - | A | 1000 | 4 | - |
| 13 | A | 0,2 | B | 1000 | 1 | 3 |
| 14 | D | 0,2 | C | 1000 | < 0,5 | 1 |
| 15 | G | 0,2 | C | 1000 | 1 | 2 |
| 16 | A | 1,0 | C | 1000 | <0,1 | 0,5 |
| Tensid G: kationisches Tensid: Cocosalkyldimethylbenzyl-ammoniumchlorid; löslich in Wasser | | | | | | |

**Tabelle 3:**

| | | | | | | | |
|---|---|---|---|---|---|---|---|
| Viskositätsentwicklung/Löseverhalten im Brabender-Viskosimeter bei 20°C Material: Methylhydroxyethylcellulose auf Basis Holzzellstoff c; Viskosität 5000 mPas (1,9 %ig, absolut trocken, gemessen mit einem Brookfield-Viskosimeter); Einwaage 5,0 g (absolut trocken) | | | | | | | |

| Bsp. Nr. | Tensid | Einsatzmenge Tensid [%] | Herst-Variante | Theoret. Endvis. [BE] | 20 % EV [min] | 50 % EV [min] | 80 % EV [min] |
|---|---|---|---|---|---|---|---|
| 17 | - | - | A | 700 | 1,5 | 56 | - |
| 18 | A | 0,2 | B | 700 | 0,5 | 1 | 1,5 |
| 19 | A | 0,2 | C | 700 | < 0,3 | 0,5 | 1 |

Die Tabellen 2 und 3 belegen im Vergleich zu Tabelle 1, dass bei identischer Komgrößenverteilung und zugeführter Mischenergie der Grad der Verklumpung und damit auch die Viskositätsentwicklung von der durchschnittlichen Polymer-Kettenlänge abhängt. Celluloseether mit geringerer durchschnittlicher Polymer-Kettenlänge lösen sich schneller, gleichmäßiger und weisen somit allgemein bei ungenügender Mischenergie und teilweiser Verklumpung eine gleichmäßigere Viskositätsentwicklung auf als Celluloseether mit größerer durchschnittlicher Polymer-Kettenlänge.

Unabhängig von der Endviskosität beobachtet man jedoch eine verbesserte Benetzung und klumpenfreieres Einrührverhalten, wenn dem zu alkalisierenden Reaktandengemisch Tenside zugesetzt werden.

## Patentansprüche

1. Verfahren zur Herstellung von mindestens alkylierten, nicht-ionischen Celluloseethern, bei denen mindestens 10 % aller Hydroxygruppen alkyliert sind und die in Wasser in einem Temperaturbereich von 45 bis 95°C flockbar sind, bei dem die Umsetzung zum Celluloseether erfolgt indem
a) die Cellulose durch Alkalisierung in Gegenwart von Wasser, Base und organischem Dispergierhilfsmittel aktiviert wird,
b) die aktivierte Cellulose in einem ein- oder mehrstufigen Verfahren mit einem Veretherungsmittel im Sinn einer Williamson'schen Ethersynthese verethert wird und
c) das Produkt in einem nachfolgenden Reinigungsschritt durch Auswaschen mit Wasser, das eine Temperatur oberhalb des Flockpunktes des Celluloseethers aufweist, von Reaktionsnebenprodukten und Salzen gereinigt wird,
**dadurch gekennzeichnet, dass** vor der Umsetzung der Cellulose zum Celluloseether mindestens ein Tensid in fester, flüssiger und/oder gelöster Form zugegeben wird.

2. Verfahren gemäß Anspruch 1, **dadurch gekennzeichnet, dass** das Verhältnis von eingesetztem organischen Dispergierhilfsmittel zu Cellulose maximal 25:1 beträgt.

3. Verfahren gemäß Anspruch 1 oder 2, **dadurch gekennzeichnet, dass** der Wassergehalt im Reaktandengemisch während der Alkalisierung maximal 25 Moläquivalente, bezogen auf die eingesetzte Menge Cellulose, beträgt.

4. Verfahren gemäß mindestens einem der Ansprüche 1 bis 3, **dadurch gekennzeichnet, dass** maximal 20 Gew.-% Tensid, bezogen auf die eingesetzte Menge Cellulose, vor Zugabe der Base in das Gemisch eingeführt werden.

5. Verfahren gemäß mindestens einem der Ansprüche 1 bis 4, **dadurch gekennzeichnet, dass** Tenside eingesetzt werden, deren Netzvermögen nach DIN 53901 bei 20 °C weniger als 10 g wirksame Substanz/l beträgt.

## Claims

1. A process for preparing at least alkylated, nonionic cellulose ethers in which at least 10% of all hydroxyl groups are alkylated and which are coagulable in water in a temperature range of from 45 to 95°C, and are converted to the cellulose ether by
a) activating the cellulose by alkalization in the presence of water, base and organic dispersing auxiliary,
b) etherifying the activated cellulose in a one- or multistage process using an etherifying agent by a Williamson ether synthesis and
c) purifying the product in a subsequent purification step by washing with water which has a temperature above the coagulation point of the cellulose ether to remove reaction by-products and salts,
which comprises adding at least one surfactant in solid, liquid and/or dissolved form before the cellulose is converted to the cellulose ether.

2. The process as claimed in claim 1, wherein the maximum ratio of organic dispersing auxiliary used to cellulose is 25:1.

3. The process as claimed in claim 1 or 2, wherein the maximum water content in the reactant mixture during the alkalization is 25 molar equivalents, based on the amount of cellulose used.

4. The process as claimed in at least one of claims 1 to 3, wherein a maximum of 20% by weight of surfactant, based on the amount of cellulose used, is introduced before addition of the base to the mixture.

5. The process as claimed in at least one of claims 1 to 4, wherein surfactants are used whose wetting ability by DIN 53901 at 20°C is less than 10 g of active substance/l.

## Revendications

1. Procédé de production d'éthers de cellulose non ioniques, au moins alkylés, dans lesquels au moins 10% de la totalité des groupes hydroxy sont alkylés et qui sont floculables dans l'eau dans une gamme de températures de 45°C à 95°C, dans lequel on réalise la conversion en éther de cellulose
a) en activant la cellulose au moyen d'une basification en présence d'eau, d'une base et d'un dispersant organique,
b) en éthérifiant la cellulose activée dans un procédé à une ou plusieurs étapes avec un éthérifiant, dans le cadre d'une synthèse de Williamson et
c) en purifiant le produit, dans une étape de purification ultérieure, au moyen de l'élimination par lavage des sous-produits de la réaction et des sels avec de l'eau ayant une température au-dessus du point de floculation de l'éther de cellulose,
**caractérisé en ce qu'**avant la conversion de la cellulose en éther de cellulose, on ajoute au moins un tensio-actif sous forme solide, liquide et/ou dissoute.

2. Procédé selon la revendication 1, **caractérisé en ce que** le rapport du dispersant organique mis en oeuvre à la cellulose est d'au maximum 25:1.

3. Procédé selon la revendication 1 ou 2, **caractérisé en ce que** la teneur en eau du mélange de réactifs pendant la basification est d'au maximum 25 équivalents molaires par rapport à la quantité de cellulose mise en oeuvre.

4. Procédé selon au moins l'une des revendications 1 à 3, **caractérisé en ce que** l'on introduit au maximum 20% en poids de tensio-actif, par rapport à la quantité de cellulose mise en oeuvre, avant l'addition de la base dans le mélange.

5. Procédé selon au moins l'une des revendications 1 à 4, **caractérisé en ce que** l'on met en oeuvre des tensio-actifs dont le pouvoir mouillant, selon DIN 53901 à 20°C, est inférieur à 10 g de substance active/L.
